# EUROPEAN PATENT APPLICATION

(11) **EP 3 640 874 A1**
(43) Date of publication of application: **22.04.2020**
(21) Application number: 19207998.6
(22) Date of filing: 10.10.2008
(51) Int. Cl.: G06Q 10/08, G06Q 30/00, G06F 16/955

(54) **METHOD FOR AUTHENTICATING A PRODUCT IN A CONTAINER, AND ASSOCIATED METHOD FOR VERIFYING THE AUTHENTICITY OF THE PRODUCT AND ITS CONTAINER**

(62) Divisional of application: 08805227.9
(71) Applicant: OI Europe Sàrl, 1030 Bussigny-près-Lausanne (CH)
(72) Inventor: DANGMANN, Olivier, F-69400 Villefranche sur Saône (FR); DESHERAUD, Gilles, F-69009 Lyon (FR)
(74) Representative: Blumbach · Zinngrebe Patentanwälte PartG mbB

(57) **Abstract**

There is disclosed a method for authenticating a product in a container, and authenticating the container itself, comprising the steps of applying to the container a first authentication code associated with the container; obtaining a first authentication key from said first authentication code and recording said first authentication key in a first database, wherein said first authentication key comprises a first numerical or alphanumerical code; applying to the container a second authentication code independent of said first authentication code and associated with the product in the container; obtaining a second authentication key from said second authentication code and recording said second authentication key in a second database separate from said first database, wherein said second authentication key comprises a second numerical or alphanumerical code; generating a third authentication key for the associated pair of said product and its container from a computer implemented combination of said first and second authentication keys that is unique to that associated pair of said product and its container, and that comprises a third numerical or alphanumerical code that is a computer implemented combination of said first and second numerical or alphanumerical codes; and recording said third authentication key in a third database.

## Description

The present invention relates to the general technical field of product authentication and traceability.

The invention finds a dedicated application in the packaging of high value liquid products, particularly wines, spirits and fragrances, which are increasingly subject to counterfeiting, either by repackaging (or re-filling) from original containers into fake ones or by the replacement of genuine products by counterfeit products in original or fake containers.

Various methods and technologies have already been proposed and implemented to improve traceability and/or authenticity of liquid products packaged (or filled) in bottles. These methods generally involve fixing a label to the neck, cork or capsule of a bottle containing a product, the label bearing a traceability or authenticity code, or a device (electronic chip) enabling authentication of the packaged product from the producer to the final consumer. The label is designed and positioned on the bottle such that it must be broken, or at least altered, for the bottle to be opened and the product made usable.

Other methods involve printing or engraving an authentication or traceability code directly into the bottle material to at least authenticate the container itself.

Such methods allow authentication of a product and/or its container as long as both are original from their production to selling to the final user without repackaging. However, a situation may arise in which the originally packaged product is already a fake product. Or a genuine product may have been repackaged between production and sale. In such case, the product will often become completely untraceable for the final consumer, whose safety may therefore be at risk if the product and/or its container are counterfeit. There is consequently a need for a new authentication method, by which both the authenticity and the traceability of a product and its container can be ensured by producers to the consumers.

There is also a need for an authentication method which improves prevention of counterfeiting of the packaged product by repackaging or replacement of the genuine product.

These aims are satisfied, according to a first aspect of the present invention, by a method for authenticating a product conditioned in a container, and said container, characterized in that:
a) at least a first authentication means for ensuring authenticity of the container is chosen and applied to the container, and a first authentication key is extracted therefrom and recorded in a first database, and
b) at least a second authentication means for ensuring authenticity and genuiness of the product is chosen and applied to the container, and a second authentication key is extracted therefrom and recorded in a second database, and
c) at least a third authentication key for authenticating the associated pair of the product and its container is generated from a computer implemented combination of said first and second authentication keys, said third authentication key being recorded in a third database.

The method of the invention provides a complete and totally secure solution for authenticating and tracing a product from production to the end consumer. It enables a separate authentication of the product and its container by means of first and second authentication means from which first and second authentication keys are extracted respectively and recorded in two separate databases. Each associated pair of first and second authentication keys is then secured by a third authentication key derived by a computer program from the said first and second authentication keys. Through the method of the invention it is now possible to ensure that the associated pair formed by a product and its container is genuine, and that neither the product nor the container has been counterfeited. Indeed, the three separate authentication keys provide three different security levels which must be satisfied to guarantee the authenticity of the product and its container.

According to a first preferred embodiment of the method of the invention, the container of the packaged product is made of a material chosen amongst the following: glass, crystal, plastics, aluminium, ceramics.

Preferably, the first authentication means is, according to the invention, laser engraved into the material of the container.

Furthermore, the container for the packaged product is preferably a glass or crystal container, and the first authentication means is laser engraved into or on to the container at the "hot end" of the manufacturing process. Thus, the first authentication means is virtually impossible to copy or falsify.

According to another preferred embodiment of the method of the invention, the first and second authentication means are optically readable. This facilitates the checking and reading of the authentication means throughout the production and marketing of the packaged product.

To further improve the level of security of the method of the invention against counterfeiting, it is particularly advantageous that the second authentication means comprise at least a two dimensional random code from which said second authentication key is optically extracted.

Furthermore, the second authentication means may advantageously comprise at least a three dimensional random physical signature from which said second authentication key is optically extracted. In this instance, the three- dimensional random physical signature is preferably implemented such that it is visible on a label applied to the container. Furthermore,, the three-dimensional random physical signature is, according to the invention, randomly generated into a transparent material, which can be, for instance, a thermosetting polymer.

In another preferred embodiment of the invention, the container label comprises a tamper evident film and is applied on to said container as an opening seal.

According to the invention, the second authentication means advantageously also comprises a traceability code.

In a preferred embodiment of the invention, the first authentication means comprises a Datamathx code, and the second authentication means comprises a bubble tag.

In a further preferred embodiment of the invention, the first, second and third authentication keys each comprise a numerical or alphanumerical code.

In a second aspect, the present invention also relates to a method of verifying the authenticity and genuineness of a product packaged in a container, the container and the product being individually authenticated by the first and second authentication means respectively, according to the method previously described.

Such a verifying method includes at least the steps of:
a) optically reading said first authentication means for the container by means of an optical reader, said optical reader comprising means for extracting a container authentication key from the optical signal read from said first authentication means and being connected to a first database in which the original first authentication keys of each original authenticated container are recorded, b) comparing the authentication key extracted by said optical reader with each original first authentication key in the first database, and
c) if the container authentication key extracted by said optical reader corresponds to one of the original first authentication keys recorded in the first database, optically reading said second authentication means for the product packaged into said container with an optical reader, said optical reader comprising means for extracting a product authentication key from the optical signal read from said second authentication means and being connected to a second database into which the original second authentication keys of each original authenticated products are recorded, and
d) comparing the product authentication key extracted by said optical reader with each original second authentication key in the second database, and
e) if the product authentication key extracted by said optical reader corresponds to one of the original second authentication keys recorded in the second database, assessing the authenticity of the associated pair of said container and said product conditioned therein by generating a security authentication key from a computer implemented combination of said container and product authentication keys extracted with said optical reader, and comparing said security authentication key with each said original third authentication key recorded into said third database for the authentication key of the associated product container pair.

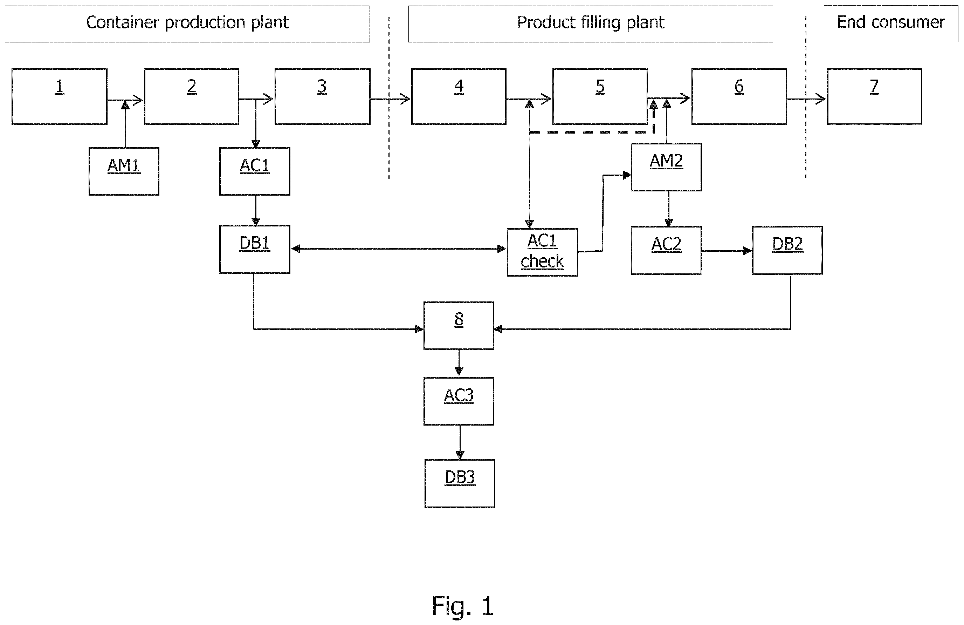

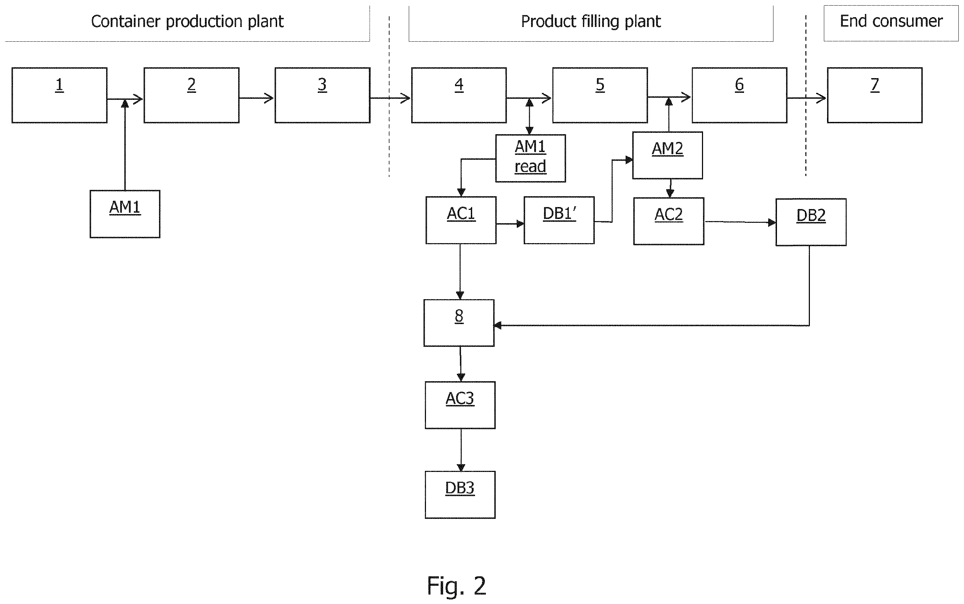

The present invention will now be presented in detail the following description, with reference to Figure 1 and 2 which schematically depict, in block form, the authentication method of the present invention in two preferred implementations.

In the following example, the method of the invention will be described in relation to the authentication of a liquid product such as wine packaged in glass bottles. However, the method of the invention is not limited to the authentication of liquid products, nor to containers made of glass. According to a first variant of the invention shown in Figure 1 , a first step of the authentication process proposed consists in providing a container, for instance a glass bottle for packaging wine, with a first authentication means for authenticating the glass bottle. Thus, at the glass production plant, glass bottles are produced in a row on a bottle forming machine 1 (typically an IS machine) into which glass bottles are molded from a batch of hot melted glass. The bottles, once molded, directly exit the IS machine 1 in a hot state and are laser engraved with a first authentication means AM1 before entering an annealing lehr 2.

According to the invention, the first authentication means AM1 is preferably and advantageously a Datamatrix code, which is laser engraved within the glass material of the bottle directly on exit of the IS machine, ie at hot end.

Such engraving at hot end of a Datamatrix code AM1 may advantageously be carried out by means of a laser engraving system, such as the Laser Hot End Engraving System marketed by MSC Inspection Worldwide company.

The engraving of a Datamatrix code AM1 at hot end into the glass material of the bottles provide a unique identification/authentication code for the bottles. This code comprises all the information required about the section of the IS machine 1 or the mold where a bottle is formed, the date of production as well as the company code, line code and plant code. The bottles formed and engraved at hot end thereby comprise a secure and resistant authentication means AM1, which is unreproducible but easily readable by means of standard optical readers.

It is thus possible to verify the authenticity of the bottles throughout their life, not only within the glass plant during production of the bottles but also after the bottles have left the production plant in the filling plant and then when the filled bottles are released for sale on the market. After passing the annealing lehr 2, the bottles are then checked, and their Datamatrix code AM1 is read by an in-line optical reader to verify correct engraving of the code into the glass material of the bottles. On reading the said Datamatrix code, a first authentication key AC1 is extracted. This first authentication key AC1 is a numerical or alphanumerical key or code automatically derived by a computer program from the reading of the Datamatrix code engraved into the bottle.

Once obtained, the first authentication key AC1 or code for the bottle, ie for the container, is recorded into a first database DB1 , which thereby accumulates the individual authentication key for each bottle produced. It is therefore possible to keep a constant trace of each marked bottle produced so that it can be scanned and identified by simple optical reading of the Datamatrix anywhere after it has been produced. After reading the Datamatrix codes AM1, the bottles are then palletised at stage 3 shown on Figure 1 before being sent to filling plants.

The second step of the authentication method of the invention consists in, after authenticating the bottles by their first authentication means AM1, authenticating the product. In the present example, the product is wine, to be packaged into the authenticated bottles.

The authentication of the packaged product according to the method of the invention includes the step of applying a second authentication means AM2 for the product on to the already authenticated bottles.

To this end, the authenticated bottles are supplied to a filling line 4 where they are filled in a row. After filling, the authentication means AM1 of each bottle thus filled is read a second time by a reading system, which is also connected to the first database DB1 into which the first authentication keys AC1 for the bottles have been recorded. It is thereby checked that all the bottles used for filling the wine are authentic bottles from their provider. Upon successful checking of the first authentication key AC1 , the reading system then triggers the application of a second authentication means AM2 for the wine on to the bottle that has just been checked. Alternatively, the checking of the AC1 code in the filling plant can also be carried out just after the filling and capping of the bottles as represented in Figure 1 by a dashed arrow.

In another variant shown in Figure 2, it is also be possible to carry out the method of the invention with a first authentication key AC1 which is extracted only at the filling plant by reading of the Datamatrix code AM1 engraved into the bottles directly on the filling line, and recording the first authentication keys AC1 in a first database DBV. Then, once each first authentication key AC1 has been recorded in database DBV, allocation of a second authentication means AM2 for the bottle that has just been read and filled with wine is triggered.

The second authentication means AM2 preferably comprises a two or three dimensional random code or signature which is formed, printed or otherwise implemented on to a label. The two or three dimensional random code or signature is directly visible and optically readable on the label, which is applied to the bottle after it has been filled with the product, for example the wine, at step 4, and after the bottle has been capped at a capping station 5. As in Figure 1 , but not represented in Figure 2, the reading of AM1 and the extraction of AC1 code can occur directly after filling at 4 and capping of the bottles at 5.

In a preferred embodiment of the method of the invention, the second authentication means for the product is a three dimensional random signature implemented on to a label. Such a 3D random signature is a unique and non-reproducible authenticator consisting of a visible 3D structure formed, as preferred in the present invention, by random generation of bubbles within a transparent material such as a thermosetting polymer.

The 3D random signature is visible on said label so that it can be read by dedicated optical means to extract a second authentication key AC2 which is then recorded into a second database DB2 for storing the authentication keys for the wine packaged in the bottles. Preferably, the authentication key AC2 corresponding to the second authentication means AM2 is extracted or attributed directly by the signature producer once it has been created, and it is printed directly on to the label so that a consumer can use the printed key to verify for himself the authenticity of a wine he bought by entering the authentication key directly on an internet website connected to the second authentication keys database DB2. If the key entered corresponds to one recorded in the database, then the consumer knows that his wine is genuine.

A particularly efficient and secure solution for applying 3D random signatures on to labels is provided by the French company PROOFTAG S.A.S using the BUBBLE TAG® technology, which is the one preferred according to the invention for forming the second authentication means.

The labels bearing the 3D random signature for authentication of the wine filled in the bottles are preferably stuck on to the neck of the bottles to form an opening seal. To this end, the labels may advantageously comprise a tamper evident film applied to the neck of each bottle, and at least partially over the cap of each bottles. The labels bearing the 3D random signature may also preferably comprise a traceability code such as a Datamatrix code.

Alternatively, the label bearing the bubble tag may also be inserted within the cap of the bottle and retracted on to the neck of the bottle after filling and corking of the bottle.

Therefore, by using Datamatrix codes AM1 engraved into the bottles at hot end, and by using 3D tags AM2 implemented on to labels applied onto the necks of the bottles after filling and closing the bottles, both the bottles and the wine therein are individually authenticated and authenticable.

The bottles are then packaged at a packaging station 6 and sent to retailers for sale to the end consumers 7.

The method of the invention further comprises a third step for authenticating the associated pair formed by the wine and its bottle to ensure that, even if the wine and the bottle are both genuine, they correspond exactly to an original associated pair as it was originally formed in the production plant, and that no separation or alteration of either the container or the product packaged therein has occurred between production and sale to the end consumer.

For this reason, the method of the invention comprises a third step in which a third authentication key AC3 for authenticating the associated pair formed by the product, eg wine, and its container, eg a bottle, is generated from a computer implemented combination of said first and second authentication keys, said third authentication key being recorded in a third database DB3.

Practically, in the depicted example, when the wine is filled into a bottle and said bottle is closed and authenticated by the application of a label with a 3D tag, the first and second authentication keys AC1 , AC2 for the bottle and wine are recorded into the databases DB1 and DB2 respectively. Said first and second authentication keys are also entered automatically into a computer system 8 and combined to generate a third, unique authentication key AC3 for the corresponding associated pair of wine and bottle.

The third authentication key AC3 is then recorded into a third database DB3.

This third authentication key is therefore the unique identifier of the associated pair formed by a single authenticable bottle and a single authenticable volume of wine packaged in said bottle.

The method of the invention thus ensures that, from production of a conditioned product, for example a bottle of wine, to its sale to end consumers, each bottle can be tracked, checked and verified to determine the genuineness:
- of the container (eg glass bottle) by reading the first authentication means AM1 applied to said container, to verify said first authentication key AC1 , - of the product (eg wine) packaged in the said container by reading the second authentication means AM2 applied to the container, to verify said second authentication key AC2,
- of the associated container-product pair by combining said first and second authentication keys AC1 , AC2 in a computer system to check if said combination corresponds to an identified third authentication key AC3 recorded in said third database DB3.

Thanks to the method of the invention, counterfeiting of an original container, for instance in the present example a glass bottle, can be easily detected, as well as counterfeiting of an original product, as it is almost impossible to obtain a recorded third authentication key without the two original first and second authentication keys AC1 , AC2 derived from said first and second authentication means AM1 , AM2 of an original associated container- product pair.

As a consequence, if either the container or the product is faked or altered, the authentication means will certainly also be faked or altered and therefore it will be impossible to generate the third authentication key AC3 required to 100% authenticate the associated container-product pair.

The present invention also relates to a method for verifying the authenticity and genuineness of a product conditioned in a container (such as wine in a glass bottle in the present example), said container and said product being individually authenticated by first and second authentication means AM1 , AM2 respectively according to the authentication method of the invention as previously described.

The verifying method of the invention includes the following steps:
a) optically reading said first authentication means AM1 for the container by means of an optical reader, said optical reader comprising means for extracting a container authentication key from the optical signal read from said first authentication means and being connected to a first database DB1 into which the original first authentication keys AC1 of each original authenticated container are recorded,
b) comparing the authentication key extracted by said optical reader with each original first authentication key AC1 in the first database, and
c) if the container authentication key extracted by said optical reader corresponds to one of the original first authentication keys AC1 recorded in the first database DB1 , optically reading said second authentication means AM2 for the product packaged into said container with an optical reader, said optical reader comprising means for extracting a product authentication key from the optical signal read from said second authentication means and being connected to a second database DB2 into which the original second authentication keys AC2 of each original authenticated products are recorded, and
d) comparing the product authentication key extracted by said optical reader with each original second authentication key AC2 in the second database DB2, and
e) if the product authentication key extracted by said optical reader corresponds to one of the original second authentication keys AC2 recorded in the second database DB2, assessing the authenticity of the associated pair of said container and said product conditioned therein by generating a security authentication key from a computer implemented combination of said container and product authentication keys extracted by said first and second optical readers, and comparing said security authentication key with each said original third authentication keys AC3 recorded into said third database DB3 for the authentication key of the associated product-container pair.

The present disclosure may further relate to a method for authenticating a product conditioned in a container, and said container, characterized in that:
a) at least a first authentication means AM1 for ensuring authenticity of the container is chosen and applied to the container, and a first authentication key AC1 is extracted therefrom and recorded in a first database DB1, DBT, and
b) at least a second authentication means AM2 for ensuring authenticity and genuineness of the product is chosen and applied to the container, and a second authentication key AC2 is extracted therefrom and recorded in a second database DB2, and
c) at least a third authentication key AC3 for authenticating the associated pair of said product and its container is generated from a computer implemented combination of said first and second authentication keys AC1 , AC2, said third authentication key being recorded in a third database DB3.

The method for authenticating a product conditioned in a container may comprise that said container is made of a material chosen amongst the following: glass, crystal, plastics, aluminium, ceramics.

The before-mentioned method may additionally comprise that said first authentication means AM1 is laser engraved into said container.

The method for authenticating a product conditioned in a container may comprise that said container is a glass or crystal container and that said first authentication means AM1 is laser engraved at hot end into said glass container.

The method for authenticating a product conditioned in a container may comprise that said first and second authentication means AM1, AM2 are optically readable.

The method for authenticating a product conditioned in a container may comprise that said second authentication means AM2 comprises at least a two dimensional random code from which said second authentication key AC2 is optically extracted.

The method for authenticating a product conditioned in a container may comprise that said second authentication means AM2 comprises at least a three dimensional random physical signature from which said second authentication key AC2 is optically extracted.

The method for authenticating a product conditioned in a container may comprise that said random three dimensional physical signature is implemented and visible on a label applied to said container.

The method for authenticating a product conditioned in a container may comprise that said three dimensional physical signature is randomly generated into a transparent material.

The method for authenticating a product conditioned in a container may comprise that said transparent material is a thermosetting polymer.

The method for authenticating a product conditioned in a container may comprise that said label comprises a tamper evident film and is applied on to said container as an opening seal.

The method for authenticating a product conditioned in a container may comprise that said second authentication means AM2 also comprises a traceability code.

The method for authenticating a product conditioned in a container may comprise that said first authentication means AM1 comprises a data matrix code and said second authentication means AM2 comprises a bubble tag.

The method for authenticating a product conditioned in a container may comprise that said first, second and third authentication keys AC1, AC2, AC3 each comprises a numerical or alphanumerical code.

Further in the present disclosure a method for verifying the authenticity and genuineness of a product packaged in a container is disclosed, said container and said product being individually authenticated respectively by first and second authentication means AM1, AM2 as depicted above, and including the steps of:
a) optically reading said first authentication means AM1 for the container by means of an optical reader, said optical reader comprising means for extracting a container authentication key from the optical signal read from said first authentication means and being connected to said first database DB1, DB1' into which the original first authentication keys AC1 of each original authenticated container are recorded,
b) comparing the authentication key extracted by said optical reader with each original first authentication key AC1 in the first database, and
c) if the container authentication key extracted by said optical reader corresponds to one of the original first authentication keys AC1 recorded in the first database DB1, DB1', optically reading said second authentication means AM2 for the product packaged into said container with an optical reader, said optical reader comprising means for extracting a product authentication key from the optical signal read from said second authentication means and being connected to said second database DB2 in which the original second authentication keys AC2 of each original authenticated product are recorded, and
d) comparing the product authentication key extracted by said optical reader with each original second authentication key AC2 in the second database DB2, and
e) if the product authentication key extracted by said optical reader corresponds to one of the original second authentication keys recorded in the second database, assessing the authenticity of the associated pair of said container and said product packaged therein by generating a security authentication key from a computer implemented combination of said container and product authentication keys extracted by said optical reader, and comparing said security authentication key with each said original third authentication keys AC3 recorded in said third database DB3 for the authentication keys of the associated product-container pairs.

This application is a divisional application of European Patent Application EP 08 805 227 (EP2350912A1), which is incorporated by reference herewith in its entirety as originally filed. Applicant reserves the right to go back to and claim any subject matter which is disclosed in European Patent Application EP 08 805 227 (EP2350912A1) within this divisional application or by way of one or more potential consecutive divisional applications, irrespective of the scope of the attached set of claims.

## Claims

1. A method for authenticating a product in a container, and authenticating the container itself, comprising the steps of:
a) applying to the container a first authentication code associated with the container;
b) obtaining a first authentication key from said first authentication code and recording said first authentication key in a first database, wherein said first authentication key comprises a first numerical or alphanumerical code;
c) applying to the container a second authentication code independent of said first authentication code and associated with the product in the container;
d) obtaining a second authentication key from said second authentication code and recording said second authentication key in a second database separate from said first database, wherein said second authentication key comprises a second numerical or alphanumerical code;
e) generating a third authentication key for the associated pair of said product and its container from a computer implemented combination of said first and second authentication keys that is unique to that associated pair of said product and its container, and that comprises a third numerical or alphanumerical code that is a computer implemented combination of said first and second numerical or alphanumerical codes; and
f) recording said third authentication key in a third database.

2. A method according to claim 1, wherein said container is made of a material chosen amongst the following: glass, crystal, plastics, aluminum and ceramics.

3. A method according to claim 1 or 2, wherein said first authentication code is laser engraved onto said container in said step (a).

4. A method according to at least one of claims 1 to 3, wherein said container is a glass or crystal container and that said first authentication code is laser engraved at a hot end of a manufacturing process for the container.

5. A method according to at least one of claims 1 to 4, wherein said first and second authentication codes are optically readable.

6. A method according to at least one of claims 1 to 5, wherein said second authentication code comprises at least a two-dimensional random code from which said second authentication key is optically read in said step (d).

7. A method according to at least one of claims 1 to 6, wherein said second authentication code comprises at least a three dimensional random physical signature from which said second authentication key is optically read in said step (d).

8. A method according to claim 7, wherein said random three-dimensional physical signature is implemented and visible on a label applied to said container in said step (c).

9. A method according to claim 7 or 8, wherein said three-dimensional physical signature is randomly generated into a transparent material and applied to the container in said step (c).

10. A method according to claim 9, wherein said transparent material is a thermosetting polymer.

11. A method according to at least one of claims 8 to 10, wherein said label comprises a tamper evident film and is applied to said container as an opening seal.

12. A method according to at least one of claims 1 to 11, wherein said second authentication code also comprises a traceability code.

13. A method according to at least one of claims 1 to 12, wherein said first authentication code comprises a data matrix code and said second authentication code comprises a bubble tag.

14. A method for verifying the authenticity and genuineness of a product packaged in a container, said container and said product being individually authenticated respectively by first and second authentication codes in accordance with the method set forth in at least one of claims 1 to 13, including the steps of:
optically reading said first authentication code for the container by means of an optical reader, said optical reader configured to obtain a container authentication key from an optical signal read from said first authentication code and being connected to said first database in which original first authentication keys of each original authenticated container are recorded,
comparing the authentication key obtained by said optical reader in step (a) with each original first authentication key in the first database,
when the container authentication key obtained by said optical reader corresponds to one of the original first authentication keys recorded in the first database, optically reading said second authentication code for the product packaged into said container with an optical reader, said optical reader configured to obtain a product authentication key from the optical signal read from said second authentication code and being connected to said second database in which original second authentication keys of each original authenticated product are recorded,
comparing the product authentication key obtained by said optical reader with each original second authentication key in the second database, and
when the product authentication key obtained by said optical reader corresponds to one of the original second authentication keys recorded in the second database, assessing the authenticity of the associated pair of said container and said product packaged therein by generating a security authentication key from a computer implemented combination of said container and product authentication keys obtained by said optical reader, and
comparing said security authentication key with original third authentication keys recorded in said third database as the authentication keys of associated product-container pairs.

15. A method for verifying the authenticity and genuineness of a product packaged in a container, comprising:
optically reading a first authentication code associated with the container by means of an optical reader, said optical reader configured to obtain a container authentication key from the optical signal read from said first authentication code, wherein said container authentication key comprises a first numerical or alphanumerical code;
comparing the container authentication key obtained by said optical reader with each of one or more container authentication keys of one or more respective container authentication codes stored in a database;
when the container authentication key obtained by said optical reader corresponds to one of the container authentication keys to which it was compared, optically reading a second authentication code associated with the product packaged into said container with an optical reader, said optical reader configured to obtain a product authentication key from the optical signal read from said second authentication code, wherein said product authentication key comprises a second numerical or alphanumerical code;
comparing the product authentication key obtained by said optical reader with each of one or more product authentication keys of one or more product authentication codes stored in a database; and
when the product authentication key obtained by said optical reader corresponds to one of the product authentication keys to which it was compared, assessing the authenticity of the associated pair of said container and said product packaged therein by generating a security authentication key from a computer implemented combination of said container and product authentication keys obtained by said optical reader, wherein said security authentication key comprises a third numerical or alphanumerical code that is a computer implemented combination of said first and second numerical or alphanumerical codes, and
comparing said security authentication key with each of one or more security authentication keys of one or more associated product-container pairs stored in a database.

16. A method according to claim 15, wherein said first authentication code is laser engraved into said container.

17. A method according to claim 15 or 16, wherein said second authentication code comprises at least a two-dimensional random code.

18. A method according to at least one of claims 15 to 17, wherein said first authentication code comprises a data matrix code and said second authentication code comprises a bubble tag.

19. A method according to at least one of claims 15 to 18, wherein said container, product and security authentication keys each comprises a numerical or alphanumerical code.
